# EUROPÄISCHE PATENTANMELDUNG

(11) **EP 2 036 643 A2**
(43) Veröffentlichungstag der Anmeldung: **18.03.2009**
(21) Anmeldenummer: 08015313.3
(22) Anmeldetag: 29.08.2008
(51) Int. Cl.: B23D 47/04, B23D 55/04

(54) **Werkzeugmaschine zum Schneiden und zum Bohren von Metallprofilen**

(30) Priorität: 14.09.2007 IT MI20071768
(71) Anmelder: FICEP S.P.A., 21045 Gazzada Schianno, (Varese) (IT)
(72) Erfinder: Pirovano, Allessandro, 21034 Cocquio Trevisago (IT)
(74) Vertreter: Mayer, Hans Benno

(57) **Zusammenfassung**

Werkzeug maschine (1) zum Schneiden und Bohren von Metallprofilen, mit einer Auflageebene (P) zur Aufnahme des zu bearbeitenden Werkstückes (4), wobei parallel zur Ebene für den Vorschub, den Schneidvorgang und das Entladen des Werkstückes aus der Werkzeugmaschine eine Verschiebeführung (9) vorgesehen ist, die verschiebbar eine Kontaktplatte (8,14) aufnimmt, die als erregbarer bzw. entregbarer Magnet (14) steuerbar ausgebildet ist, wobei die den Magneten aufnehmende Platte (8) steuerbar verschiebbar durch Einsatz eines steuerbaren Motores (11) ist und der Motor, unter Zwischenschaltung eines Reduziergetriebes (12) über ein Ritzel (20) auf eine Zahnstange (13) einwirkt, die parallel zur Verschiebeführung (9) angeordnet ist.

## Beschreibung

Die vorstehende Erfindung betrifft eine Maschine zum Schneiden und Bohren von Metallprofilen.

Aus dem Stand der Technik ist es bekannt, dass große Profile, z.B. Doppel-T-Profile einem Schneidvorgang zu unterziehen sind, um Werkstücke mit vorbestimmter Länge und einem bestimmtem Winkel an deren Ende herzustellen. Die so zugeschnittenen Profilstücke werden auf dem Gebiete des Metallbaues eingesetzt.

In Maschinen, die sich auf Sägemaschinen oder Bohrmaschinen zum Bearbeiten großer Profile beziehen, sind die Profile mit Genauigkeit einer Vorschubbewegung zu unterziehen, um zu ermöglichen, den Schneidvorgang und andere Bearbeitungsvorgänge an vorbestimmter Stelle durchführen zu können.

Im Anschluss wird aus Gründen der Einfachheit lediglich von einer Sägemaschine gesprochen, es liegt aber auf der Hand, dass der Erfindungsgedanke sowohl in einer Sägemaschine als auch in einer Bohrmaschine für die Bearbeitung großer Metallprofile zum Einsatz gelangen kann.

Aus einer Sägemaschine, die zum Stand der Technik zählt, ist eine Vorrichtung entnehmbar, die für den Vorschub eines zu bearbeitenden Metallprofiles dient.

Diese bekannte Vorrichtung besteht im Wesentlichen aus antreibbaren Spannbacken, die erhebliche Abmessungen aufweisen und über eine Vorschubwagen wirkverbunden sind, in der Art, dass das zu schneidende Metallprofil mit Genauigkeit verschiebbar ist.

Die bekannte Vorrichtung spannt unter Zuhilfenahme von Zangen oder Spannbacken das Metallprofil auf beiden Seiten. Die bekannte Vorrichtung ist aber nicht dazu geeignet, Profile mit sehr kleinen Abmessungen oder Profile mit sehr komplexer Formgebung oder mit unregelmäßigem Aufbau über einen einfachen und sicheren Spannvorgang mittels Zangen oder Spannbacken festzulegen, um dadurch das Metallprofil mit sehr hoher Genauigkeit bewegen zu können.

Ein weiterer Nachteil der bekannten Spannvorrichtung ist darin zu sehen, dass es nicht möglich ist, Werkstücke mit geringer Länge zu spannen, z.B. jene Werkstücke, die z.B. beim Anschneiden eines neuen Metallprofils entstehen.

Diese kleinen Bauteile, die z.B. beim Anschneiden eines langen Metallprofiles entstehen, fallen häufig in den unteren Teil der Werkzeugmaschine, von wo sie mit gewissen Schwierigkeiten und mit größerem Zeitaufwand zu entfernen sind.

Ein weiterer Nachteil, der vom Stand der Technik her bekannten Maschine ist darin zu sehen, dass gewisse Werkstücke, wenn diese z.B. dreieckige Querschnittsform aufweisen, nicht sicher gespannt werden können, da die Spannvorrichtung und Vorschubeinrichtung das Vorhandensein von zwei Ebenen und parallel zueinander liegenden Flächen erfordert, um ein sicheres Spannen des Werkstückes zu ermöglichen.

Aufgabe der vorstehenden Erfindung ist es daher, die Nachteile des Standes der Technik zu vermeiden und eine Vorschub- und Spannvorrichtung sowie eine Entladeeinrichtung für Profilstücke in einer Werkzeugmaschine z.B. einer Sägemaschine oder einer Bohrmaschine zu schaffen.

Diese Aufgabe wird mit einer Werkzeugmaschine zum Schneiden und Bohren großer Metallprofile unter Vorsehung einer Auflageebene zur Aufnahme der zu bearbeitenden Werkstücke dadurch erreicht, dass parallel zur Vorschubebene, der Schneidebene und der Entladeebene der Maschine eine Verschiebeführung vorgesehen ist, die verschiebbar eine Kontaktplatte aufnimmt, die als gesteuert erregbarer bzw. entregbarer Magnet vorgesehen ist, wobei die den Magnet aufnehmende Platte gesteuert, unter Einsatz eines steuerbaren Motores, verschiebbar ist und der steuerbare Motor, unter Zwischenschaltung eines Reduziergetriebes, über ein Zahnritzel auf eine Zahnstange einwirkt, die parallel zur Verschiebeführung angeordnet ist.

Weitere Vorteile und Merkmale der Erfindung können der folgenden Beschreibung, den Unteransprüchen sowie den beigefügten Zeichnungen entnommen werden.

Der Erfindungsgegenstand wird nun genauer unter Bezugnahme auf ein beispielhaftes Ausführungsbeispiel, das in den beigefügten Zeichnungen dargestellt ist, beschrieben.

Es zeigen:
Figur 1 eine perspektivische Ansicht einer Sägemaschine , die zum Schneiden großer Metallprofile geeignet ist und mit einer Vorschubeinrichtung, Positioniereinrichtung und Entladevorrichtung gemäß der vorstehenden Erfindung ausgerüstet ist;
Figur 2 zeigt die erfindungsgemäße Maschine in Vorderansicht;
Figur 3 zeigt in Vorderansicht die Vorschubeinrichtung, Positioniereinrichtung sowie Entladevorrichtung gemäß der vorstehenden Erfindung.

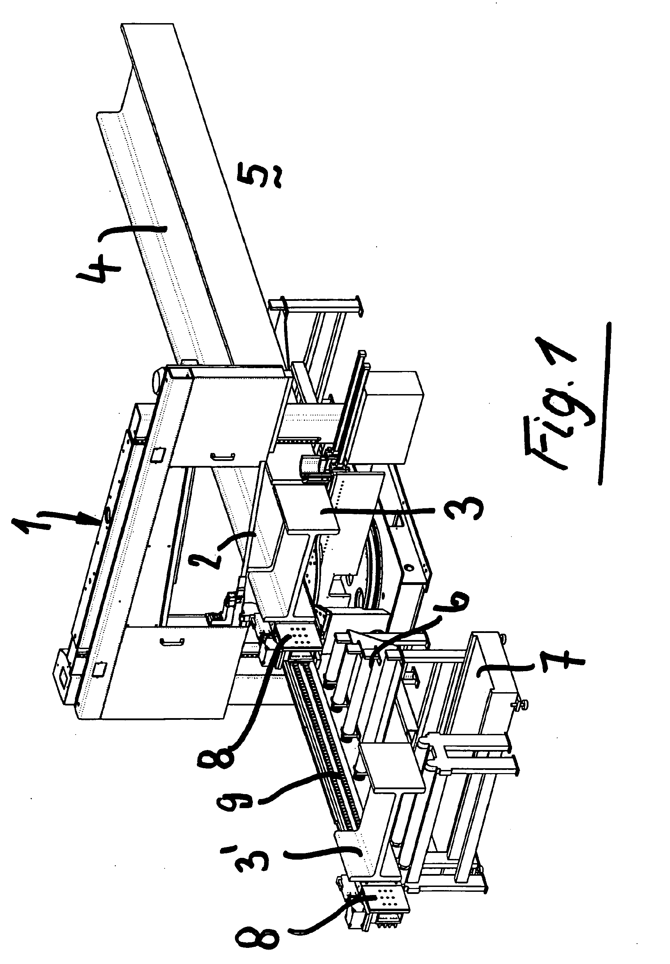

Wie der Figur 1 zu entnehmen ist, findet in vorteilhafter Weise eine Sägemaschine 1 Verwendung, die mit einem Sägeband 2, welches eine horizontale Erstreckung in der Schneidebene aufweist und zum Abschneiden der Werkstücke mit gewünschter Länge und gewünschtem Winkel von einem langen Metallprofil, das insgesamt mit 4 gekennzeichnet ist, dient.

Das Metallprofil 4 wird in üblicher Weise gefördert und liegt auf einer horizontal angeordneten Rollenbahn 5 auf, diese ist in Figur 1 nicht im Detail dargestellt.

Das abgetrennte Teil 3 des Metallprofiles 4 wird einer Rollenbahn 6 zugeführt und am Ende dieser Rollenbahn 6 wird das Werkstück 3' einer querverlaufenden, untenliegenden Bahn 7 übergeben.

Es können in vorteilhafter Weise auch sehr kleine Bauteile oder Materialausschnitte entladen werden, die z.B. bei Anfang eines Schneidvorganges entstehen.

In Übereinstimmung mit dem Schneidebereich, der durch das Sägeband 2 festgelegt wird, ist eine Vorschubvorrichtung 8 für das Profil 4 bzw. für das abgetrennte Werkstück 3 dargestellt. Diese Vorschubvorrichtung 8 kann gesteuert und mit hoher Präzision längs zweier parallel angeordneter Führungen, gesamthaft mit 9 gekennzeichnet, verfahren werden.

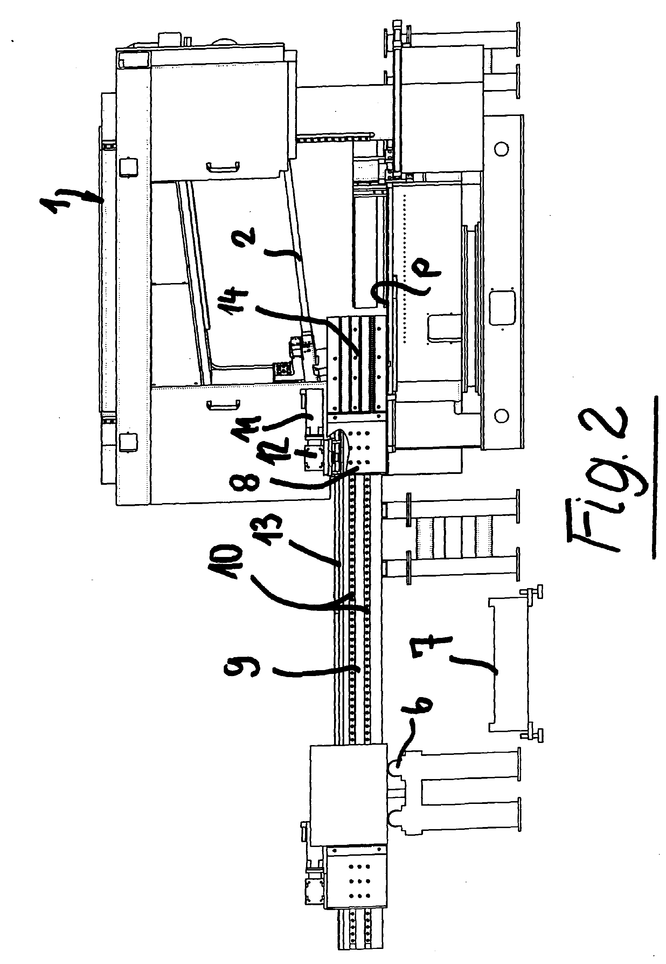

Der Figur 2 kann in einer Vorderansicht die Sägemaschine 1 mit zugeordneten Sägeblatt 2 entnommen werden, ferner sind die Parallelführungen 9 ersichtlich, die Führungsbahnen 10 bilden, die als Präzisionsführungen ausgebildet sind, und sich von dem Schneidbereich der Maschine, in dem das Sägeblatt 2 wirksam wird, bis zum Ende der Strecke 6 erstreckt, wobei die quer angeordnete untenliegende Entladevorrichtung 7 überquert wird.

Die Vorrichtung 8, die als Zugwagen für die Metallprofile 4, 3, 3' dient, kann entlang der Führungen 10, unter der Einwirkung eines Motores 11, der über eine NC-Einrichtung der Maschine 1 gesteuert wird, verfahren werden.

Der Motor 11 wirkt auf ein Reduziergetriebe 12 ein, dessen Zahnritzel (nicht dargestellt) mit einer Zahnstange 13 in Wirkverbindung steht, die parallel zu den Führungen 10 angeordnet ist.

Die Vorrichtung 8 steht mit einer Auflageplatte 14 in Wirkverbindung und diese Platte kann in gesteuerter Weise magnetisch erregt werden (NC der Werkzeugmaschine), um als Magnet zu arbeiten oder, diese Platte 14 kann entregt werden, wodurch die Funktion als Magnet erlischt.

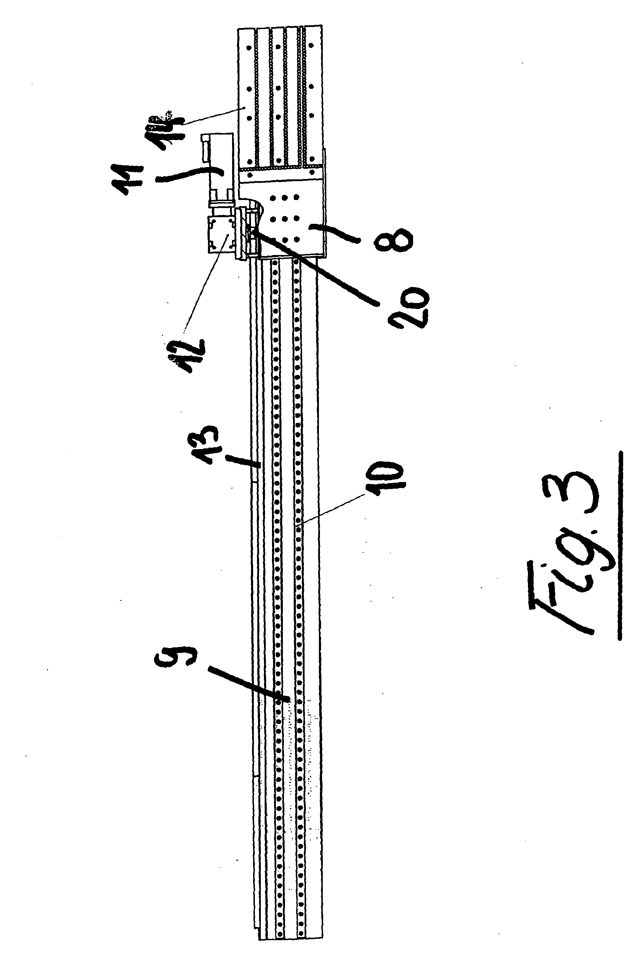

Der Figur 3 können im Detail die parallel angeordneten Führungen 10 der Vorrichtung 9 entnommen werden, ferner ist der Wagen 8 erkennbar, der ein Reduziergetriebe 12 aufweist und unter Kontrolle des steuerbaren Motores 11 ein Zahnrad 20 antreibt, welches mit einer Zahnstange 13 in Wirkverbindung steht, die parallel zu den Führungen 10 angeordnet ist.

Die Arbeitsweise der erfindungsgemäßen Vorrichtung ist folgende:

Während des Schneidvorganges ist die Vorrichtung 8, die als Wagen arbeitet, zusammen mit der Magnetplatte 14 in der Nähe des Sägebandes 2 angeordnet, wie in Figur 1 dargestellt.

Dabei wird durch die Vorrichtung 8 mit der zugehörigen Magnetplatte 14, die magnetisch erregt wurde, ein Festhalten des Werkstückes 4, erreicht, das nach Durchführung des Schneidvorganges (siehe Fig. 1) unter ständiger Arretierung durch die Magnetplatte 14 der Vorrichtung 8 in die Stellung 3' gefahren wird (Figur 1).

Durch Aufheben der Magnetisierung der Platte 14, besteht die Möglichkeit das Werkstück 3' freizugeben und zu entladen.

Handelt es sich um kleinere Werkstücke können diese auch als Verschnitt entladen werden, der zu Beginn eines Anschneidvorganges erzeugt wird. Dieser Verschnitt kann z.B. auf das querliegende Band 7 abgelegt und abgefördert werden.

Die Vorsehung eines über eine NC-Einrichtung steuerbaren Motores 11, der über ein Reduziergetriebe 12 auf das Zahnritzel 20 einwirkt, welches mit einer Zahnstange 13 wirkverbunden ist, die parallel zu den Präzisionführungen 10 der Vorrichtung 8 angeordnet sind, erlaubt es nach Bedarf auf das Profil 4 sowie die abgetrennten Werkstücke 3, 3' einzuwirken, und diese entlang der Ebene P der Maschine zu fördern, entsprechend den durchzuführenden Schneidevorgängen und entsprechend dem Entsorgungsverfahren für die angefertigten Werkstücke.

So kann die Vorrichtung 8 dazu verwendet werden, dass Metallprofil 4 entlang einer Ebene P vorwärts zu bewegen, um in eine Lage für den Anschnitt zu gelangen oder aber, das Metallprofil 4 kann in eine Lage gefördert werden, in der ein Schneidevorgang auf Maß, unter Einsatz des Sägebandes 2 der Maschine 1 erfolgt (oder ein Bohrvorgang unter Einsatz von entsprechenden Bohreinrichtungen).

Das abgetrennte Werkstück 3 kann entlang der Ebene P unter Verwendung der Vorrichtung 8 bewegt werden, diese Bewegung erfolgt, gesteuert über die NC-Einrichtung der Maschine, entlang der Parallelführungen 9, so lange bis sich das Werkstück 3 in einer Lage über dem querliegenden Abförde-/Entladeband 7 befindet.

Das Werkstück 3 kann auch in eine Lage 3' gefördert werden, diese Lage befindet sich am Ende des horizontalen Rollenganges 6.

Somit wird durch die Erfindung eine einfache Vorrichtung mit zuverlässiger, einfacher Bauart vorgeschlagen, die eine präzise Bewegung für das Anordnen des Metallprofiles 4 in einer Bearbeitungslage ermöglicht, in der das Werkstück einem Schneidevorgang zu unterziehen ist.

Ferner kann das abgetrennte Werkstück 3 durch Betätigen der Vorrichtung 8 entladen werden, um in eine genau festgelegte Endstellung gebracht zu werden (Erregen/Entregen der Platte 14).

Schließlich wird durch die erfindungsgemäße Vorrichtung lediglich Platz beansprucht, der in vorteilhafter Weise auschließlich an der Rückseite oder an der zurückgesetzten Seite der Sägemaschine 1 liegt, wobei die vordere Zone der Sägemaschine 1 vollständig frei liegt und keine Spannvorrichtungen, z.B. Spannzangen oder ähnliche störende Bauteile aufweist.

Schließlich können durch die Vorrichtung auch Werkstücke getrennt und mit Sicherheit entladen werden, wobei diese im Querschnitt keilförmige, U-förmige oder doppel-T-förmige bzw. runde oder quadratiche Form aufweisen.

Die erfindungsgemäße Vorrichtung wurde im vorangegangenen Text hauptsächlich für eine Sägemaschine mit horizontal angeordnetem Sägeband beschrieben, es ist aber naheliegend, dass die Vorrichtung auch zum Posizionieren sowie für den Vorschub und ein Entladen von Metallprofilen in einer anderen Werkzeugmaschinen, wie z.B. einer Bohrmaschine für Stahlprofile, zum Einsatz gelangen kann.

## Patentansprüche

1. Werkzeugmaschine (1) zum Schneiden und Bohren von Profilen (4), mit einer Auflageebene (P) für die Aufnahme des zu bearbeitenden Werkstückes (4), **dadurch gekennzeichnet, dass** parallel zur Ebene (P) für den Vorschub zum Schneiden und zum Entladen eines Werkstückes (4) aus der Werkzeugmaschine (1) eine Führung (9) vorgesehen ist, die verschiebbar eine Kontaktplatte (8, 14) aufnimmt, wobei die Kontaktplatte (8, 14) als steuerbar erregbarer bzw. entregbarer Magnet ausgebildet ist und die Platte (8) die den Magnet (14) aufnimmt steuerbar über einen steuerbaren Motor (11) verschiebbar ist und der Motor (11) durch Zwischenschaltung eines Reduziergetriebes (12) über ein Zahnritzel (20) auf eine Zahnstange (13) einwirkt, die parallel zu den Parallelführungen (9, 10) angeordnet ist.

2. Werkzeugmaschine, zum Schneiden und Bohren von Profilen, nach Patentanspruch 1, **dadurch gekennzeichnet, dass** am Ende des Rollenganges (6) eine querliegende untere Förderstrecke (7) angeordnet ist.

3. Werkzeugmaschine, zum Schneiden und Bohren von Profilen, nach Patentanspruch 1, **dadurch gekennzeichnet, dass** die Vorrichtung (8) zum Verschieben des Profiles (4) bzw. des abgetrennten Werkstückes (8) mit Präzision entlang der Parallelführungen (9,10) verfahrbar ist.

4. Werkzeugmaschine, zum Schneiden und Bohren von Profilen, nach Patentanspruch 1, **dadurch gekennzeichnet, dass** die Parallelführungen (9) durch Führungsschienen (10) gebildet sind, die als Präzisionsführungen ausgebildet sind und vom Schneidbereich, in dem das Sägeblatt (2) zum Einsatz gelangt, bis zum Ende der Bahn (6) erstreckt und die querliegende Entladevorrichtung (7) überbrückt.

5. Werkzeugmaschine, zum Schneiden und Bohren von Profilen, nach Patentanspruch 1, **dadurch gekennzeichnet, dass** die Vorrichtung (8) mit einer Magnetplatte (14) wirkverbunden ist und diese gesteuert über die NC-Einrichtung der Maschine erregt bzw. entregbar ist.

6. Werkzeugmaschine, zum Schneiden und Bohren von Profilen, **dadurch gekennzeichnet, dass** die parallel angeordneten Führungen (9) am rückwärtigen oder zurückgesetzten Teil des Maschinenkörpers der Sägemaschine (1) angeordnet sind.
